(19) Europäisches Patentamt / European Patent Office / Office européen des brevets

(11) **EP 2 520 906 B1**

(12) **EUROPÄISCHE PATENTSCHRIFT**

(45) Veröffentlichungstag und Bekanntmachung des Hinweises auf die Patenterteilung:
**20.05.2015  Patentblatt 2015/21**

(51) Int Cl.:
***G01D 5/347*** *(2006.01)*

(21) Anmeldenummer: **12164250.8**

(22) Anmeldetag: **16.04.2012**

(54) **Optische Positionsmesseinrichtung**

Optical positioning device

Dispositif optique de mesure de la position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2011  DE 102011075286**

(43) Veröffentlichungstag der Anmeldung:
**07.11.2012  Patentblatt 2012/45**

(73) Patentinhaber: **Dr. Johannes Heidenhain GmbH 83301 Traunreut (DE)**

(72) Erfinder: **Hermann, Michael 83342 Tacherting (DE)**

(56) Entgegenhaltungen:
**EP-A1- 2 233 892    US-A1- 2007 024 865**

**Beschreibung**

Die vorliegende Erfindung betrifft eine optische Positionsmesseinrichtung.

Bekannte optische Positionsmesseinrichtungen zur Erfassung der Position von zwei relativ zueinander entlang mindestens einer Messrichtung beweglichen Objekten bestehen aus einer Maßverkörperung, die mit einem der beiden Objekte verbunden ist, sowie einer Abtasteinheit, die mit dem anderen der beiden Objekte verbunden ist. Die Maßverkörperung umfasst hierbei eine sich in Messrichtung erstreckende Inkrementalteilung; die Abtasteinheit weist eine Lichtquelle, ein oder mehrere Gitter sowie eine Detektoranordnung auf. Auf Seiten der Detektoranordnung sind mehrere in einer Detektionsebene angeordnete Gruppen von Detektorelementen vorgesehen. Im Fall der Relativbewegung der beiden Objekte sind aus der Abtastung eines in der Detektionsebene resultierenden periodischen Streifenmusters über die Detektorelemente mehrere positionsabhängige, phasenverschobene Abtastsignale erzeugbar. Die Detektorelemente mit phasengleichen Abtastsignalen bilden jeweils eine Gruppe. Typischerweise werden für eine sogenannte Einfeldabtastung zur Erzeugung von vier um je 90° phasenversetzten Abtastsignalen innerhalb einer Periode des Streifenmusters vier vorzugsweise rechteckförmige Detektorelemente in der Detektoranordnung vorgesehen. Eine derartige Einfeldabtastung erweist sich auch bei nicht-idealen Betriebsbedingungen, wie z.B. im Fall eventueller Verschmutzungen der abgetasteten Maßverkörperung, als vorteilhaft, da lediglich eine geringe Beeinträchtigung der idealen Signalform der Abtastsignale resultiert.

Mit zunehmender Auflösung derartiger Positionsmessgeräte werden die Perioden des resultierenden Streifenmusters in der Detektionsebene immer kleiner. Im Hinblick auf die Detektorelemente existieren andererseits technologische Beschränkungen im Hinblick auf deren minimal mögliche Breite. Bei einem vorgesehenen Abstand benachbarter Detektorelemente von 5 $\mu$m und einer minimal möglichen Breite eines Detektorelements von 5 $\mu$m, kann somit keine Streifenmusterperiode unterhalb von 40 $\mu$m mehr über eine derartige konventionelle Einfeldabtastung abgetastet werden. Weiterhin erhöht sich bei immer kleineren Detektorelementstrukturen der Anteil der Randkapazitäten an der Gesamtkapazität der jeweiligen Detektorelemente. Es ergibt sich daher das Problem, auch für hochauflösende optische Positionsmesseinrichtungen geeignete Maßnahmen anzugeben, um auch bei nicht-idealen Betriebsbedingungen eine gute Signalqualität zu gewährleisten.

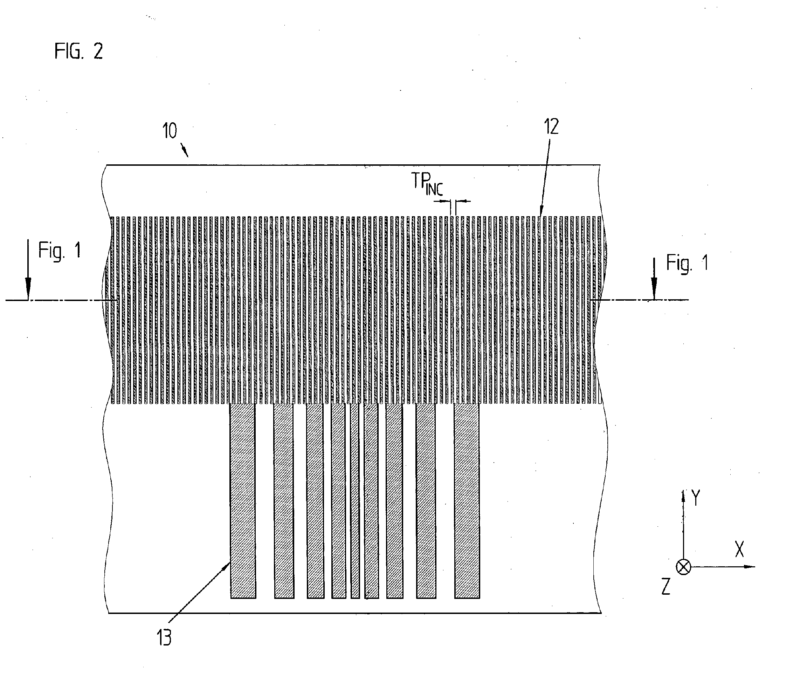

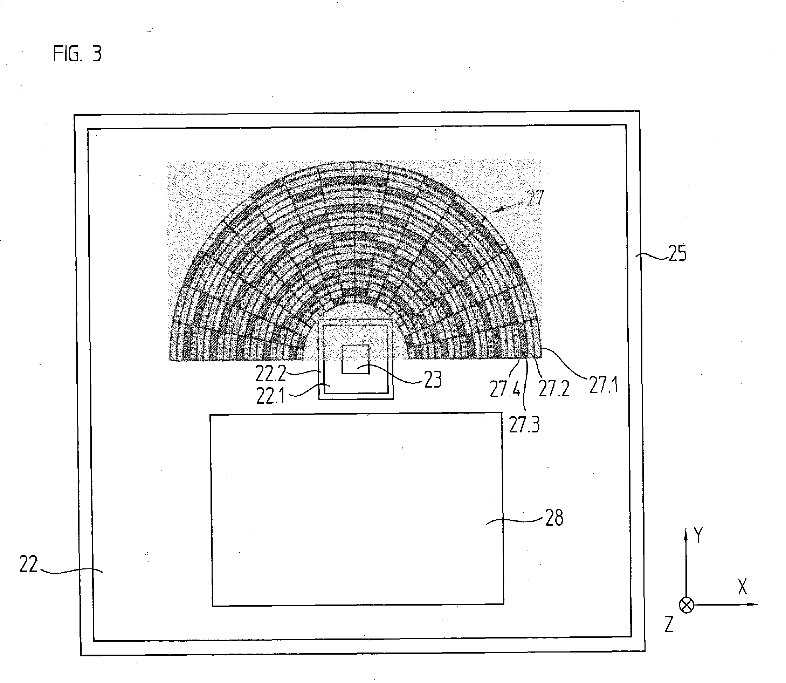

Zur Lösung dieser Problematik ist bekannt, vor der Detektoranordnung Blendenstrukturen mit periodisch angeordneten lichtdurchlässigen Bereichen zu platzieren, deren Periodizität kleiner ist als die Ausdehnung eines einzelnen Detektorelements in Messrichtung. Beispielsweise sei hierzu auf die Figuren 2 und 3 in der Veröffentlichung J. Carr et al. mit dem Titel "Miniaturised optical encoder for ultra precision metrology systems" in Precision Engineering 33 (2009) S. 263 - 267 verwiesen. Problematisch bei dieser Vorgehensweise ist jedoch, dass die Blendenstrukturen hochpräzise in Bezug auf die Detektorelemente ausgerichtet werden müssen, wenn die Detektorelemente klein sind. Andernfalls resultieren Abtastsignale mit geringer Qualität, d.h. mit geringerem Modulationsgrad und damit geringerer Signalamplitude. Im Fall größerer Detektorelemente ist hingegen die Justage der Blendenstrukturen unkritischer, bei nicht-idealen Betriebsbedingungen kann aber keine gute Signalqualität mehr gewährleistet werden.

Die EP 2 233 892 A1 offenbart eine optische Positionsmesseinrichtung zur Erfassung der Relativposition zweier gegeneinander rotatorisch beweglicher Objekte. Eines der Objekte ist mit einer zylindrischen Maßverkörperung verbunden, das andere mit einer Detektoranordnung und einer Scheibe, welche ein weiteres zylinderförmiges Gitter aufweist. Die Detektoranordnung umfasst mehrere sektorförmige Detektorelemente zur Detektion phasenverschobener Abtastsignale, wobei die Detektorelemente mit phasengleichen Abtastsignalen jeweils einer Gruppe zugeordnet sind. Die Summen der Flächen unterschiedlicher Gruppen sind jeweils identisch; ferner sind die Flächenschwerpunkte der Detektorelemente der verschiedenen Gruppen identisch.

Aufgabe der vorliegenden Erfindung ist es, eine hochauflösende optische Positionsmesseinrichtung anzugeben, die auch bei nicht-ideal zueinander ausgerichteten Komponenten im Abtaststrahlengang oder nicht-idealen Betriebsbedingungen eine bestmögliche Qualität der resultierenden Abtastsignale gewährleistet.

Diese Aufgabe wird gelöst durch eine Positionsmesseinrichtung mit den Merkmalen gemäß Anspruch 1.

Vorteilhafte Ausführungen der erfindungsgemäßen optischen Positionsmesseinrichtung ergeben sich aus den Maßnahmen in den abhängigen Ansprüchen.

Die erfindungsgemäße optische Positionsmesseinrichtung zur Erfassung der Position von zwei relativ zueinander entlang mindestens einer Messrichtung beweglichen Objekten umfasst zum einen eine Maßverkörperung, die mit einem der beiden Objekte verbunden ist und eine sich in Messrichtung erstreckende Inkrementalteilung aufweist. Ferner umfasst die Positionsmesseinrichtung eine Abtasteinheit, die mit dem anderen der beiden Objekte verbunden ist und eine Lichtquelle, ein oder mehrere Gitter sowie eine Detektoranordnung aufweist. Die Detektoranordnung besteht aus mehreren in einer Detektionsebene angeordneten Gruppen von Detektorelementen, über die im Fall der Relativbewegung der beiden Objekte aus der Abtastung eines in der Detektionsebene resultierenden periodischen Streifenmusters mehrere positionsabhängige, phasenverschobene Abtastsignale erzeugbar sind. Die Detektorelemente mit phasengleichen Abtastsignalen bilden jeweils eine Gruppe. Hierbei sind die Summe der Flächen der Detektorelemente einer Gruppe identisch mit der Summe der Flächen der Detektorelemente jeder anderen Gruppe. Ferner ist der Flächenschwerpunkt der Detektorelemente einer Gruppe identisch mit dem Flächenschwerpunkt der Detektorelemente jeder anderen Gruppe. Vor den lichtempfindlichen Flächen der Detektorelemente sind periodische Blendenstrukturen angeordnet.

Vorzugsweise bestehen die periodischen Blendenstrukturen aus zumindest in Messrichtung alternierend angeordneten lichtdurchlässigen und lichtundurchlässigen Bereichen, deren Periodizität kleiner als die Ausdehnung der Detektorelemente in Messrichtung ist.

Desweiteren ist es möglich, dass

- die Summe der Flächen der lichtdurchlässigen Bereiche der Blendenstrukturen, die einer Gruppe von Detektorelementen zugeordnet sind, identisch mit der Summe der Flächen der lichtdurchlässigen Bereiche der Blendenstrukturen ist, die jeder anderen Gruppe von Detektorelementen zugeordnet sind und
- die Flächenschwerpunkte der lichtdurchlässigen Bereiche der Blendenstrukturen, die einer Gruppe von Detektorelementen zugeordnet sind, identisch mit den Flächenschwerpunkten der lichtdurchlässigen Bereiche der Blendenstrukturen sind, die jeder anderen Gruppe von Detektorelementen zugeordnet sind.

Ferner kann vorgesehen werden, dass

- die verschiedenen Gruppen von Detektorelementen ferner gleiche Werte der drei Komponenten des zweiten Flächenempfindlichkeitsmoments aufweisen und
- die lichtdurchlässigen Bereiche der Blendenstrukturen, die verschiedenen Gruppen von Detektorelementen zugeordnet sind, gleiche Werte der drei Komponenten des zweiten Flächenempfindlichkeitsmoments aufweisen.

Schließlich ist es möglich, dass

- die verschiedenen Gruppen von Detektorelementen ferner gleiche Werte aller weiteren Flächenempfindlichkeitsmomente aufweisen und
- die lichtdurchlässigen Bereiche der Blendenstrukturen, die verschiedenen Gruppen von Detektorelementen zugeordnet sind, ferner gleiche Werte aller weiteren Flächenempfindlichkeitsmomente aufweisen.

Es kann hierbei vorgesehen sein, dass

- die Blendenstrukturen als Gitter auf einer Abtastplatte ausgebildet sind und die Abtastplatte oberhalb der Detektoranordnung in der Abtasteinheit angeordnet ist oder
- die Blendenstrukturen als Metallisierungsschicht mit lichtdurchlässigen Bereichen auf den Detektorelementen ausgebildet sind.

Mit Vorteil wird die Ausdehnung der Blendenstrukturen in Messrichtung gemäß d = 1/3 · $P_D$ oder gemäß d = 1/4 · PD gewählt, wobei
d := Breite der Blendenstrukturen in Messrichtung x,
$P_D$ := Periodizität der lichtdurchlässigen Bereiche der Blendenstrukturen.

Es ist ferner möglich, dass die Blendenstrukturen in Abhängigkeit einer Gewichtungsfunktion nur auf einem Teil der Detektorelemente angeordnet sind.

Hierbei können die Blendenstrukturen lediglich auf Detektorelementen der Detektoranordnung angeordnet sein, die zusammen näherungsweise einen quadratischen Bereich bilden.

Desweiteren kann die Detektoranordnung in Form eines Kreissegments ausgebildet sein und mehrere Kreissektoren umfassen, in denen jeweils mehrere Detektorelemente in mehreren kreisringförmigen Spuren radial benachbart angeordnet sind.

Insbesondere kann die Detektoranordnung hierbei halbkreisförmig ausgebildet werden.

Es kann ferner vorgesehen werden, dass die Detektorelemente benachbarter Spuren, die phasengleiche Abtastsignale erzeugen, über diagonal verlaufende Kontaktierungsverbindungen miteinander elektrisch verbunden sind.

Desweiteren können die Detektorelemente aus einer Gruppe an den Endkanten der kreissegmentförmigen Detektoranordnungen über Ankontaktierungsverbindungen mit nachgeordneten Signalverarbeitungselementen verbunden sein.

Vorzugsweise ist die Detektoranordnung benachbart zur Lichtquelle in der Abtasteinheit angeordnet, wobei in der Detektionsebene eine Schutzdiode angeordnet ist, welche die Lichtquelle geschlossen umläuft.

Schließlich ist es möglich, dass die geometrische Ausbildung der radial innersten Spur der Detektorelemente von der geometrischen Ausbildung der in radialer Richtung benachbarten Spur abweicht.

Als maßgeblicher Vorteil der hochauflösenden erfindungsgemäßen optischen Positionsmesseinrichtung ist anzuführen, dass auch bei nicht-idealen Betriebsbedingungen eine gute Qualität der erzeugten Abtastsignale gewährleistet ist. So resultiert zum einen eine hohe Unempfindlichkeit gegenüber eventuellen Verschmutzungen der abgetasteten Maßverkörperung; zum anderen ergibt sich eine hohe Unempfindlichkeit des Gesamtsystems auch im Fall einer nicht-idealen Montage von Komponenten im Abtaststrahlengang bzw. in der Abtasteinheit oder aber im Fall eines nicht-idealen Anbaus der Positionsmesseinrichtung.

Ferner resultieren geringere Randkapazitäten in den Detektorelementen, was eine höhere mögliche Bandbreite bzw. ein geringeres Rauschen der Abtastsignale zur Folge hat.

Die erfindungsgemäßen Maßnahmen können sowohl bei rotatorischen als auch bei linearen Positionsmesseinrichtungen zum Einsatz kommen.

Weitere Vorteile sowie Einzelheiten der vorliegenden Erfindung ergeben sich aus der nachfolgenden Beschreibung von mehreren Ausführungsbeispielen anhand der beiliegenden Figuren.

Es zeigt hierbei

Figur 1  eine stark schematisierte Darstellung einer Ausführungsform der erfindungsgemäßen optischen Positionsmesseinrichtung;

Figur 2  eine Draufsicht auf die abgetastete Maßverkörperung der Positionsmesseinrichtung aus Figur 1;

Figur 3  eine Draufsicht auf die Detektoranordnung der Positionsmesseinrichtung aus Figur 1;

Figur 4  eine stark vereinfachte Schemadarstellung zur Erläuterung der erfindungsgemäßen Ausbildung der Detektoranordnung;

Figur 5  eine Teilansicht der Detektoranordnung aus Figur 3 mit Blendenstrukturen;

Figur 6  eine Teilansicht der Detektoranordnung aus Figur 3 ohne Blendenstrukturen;

Figur 7  eine Teilansicht einer Detektoranordnung, die für eine weitere Ausführungsform der erfindungsgemäßen optischen Positionsmesseinrichtung geeignet ist.

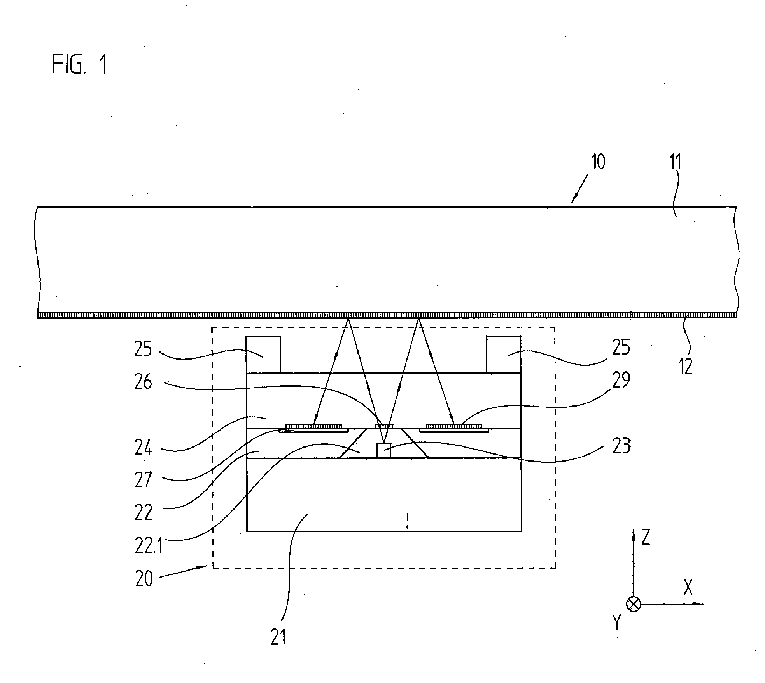

In den Figuren 1 - 3 ist eine als Auflichtsystem ausgebildete Ausführungsform der erfindungsgemäßen optischen Positionsmesseinrichtung in stark schematisierten Teilansichten dargestellt. Figur 1 zeigt eine seitliche Schnittdarstellung, Figur 2 eine Draufsicht auf die abgetastete Maßverkörperung und Figur 3 eine Draufsicht auf die Detektionsebene in der Abtasteinheit.

Die erfindungsgemäße optische Positionsmesseinrichtung zur Erfassung der Position von zwei relativ zueinander entlang mindestens einer Messrichtung x beweglichen Objekten umfasst eine Maßverkörperung 10 sowie eine Abtasteinheit 20. Die Maßverkörperung 10 und die Abtasteinheit 20 sind mit den beiden - nicht in den Figuren dargestellten - Objekten verbunden. Bei diesen Objekten kann es sich z.B. um relativ gegeneinander bewegliche Maschinenkomponenten handeln. Über die erfindungsgemäße optische Positionsmesseinrichtung werden im Fall der Verschiebung der Maschinenkomponenten Positionssignale erzeugt, die von einer nachgeordneten Maschinensteuerung weiterverarbeitet werden.

Im dargestellten Ausführungsbeispiel ist eine lineare Positionsmesseinrichtung gezeigt, d.h. die Maßverkörperung 10 und die Abtasteinheit 20 sind entlang der angegebenen linearen Messrichtung x gegeneinander verschiebbar angeordnet.

Die Maßverkörperung 10 besteht im vorliegenden Beispiel aus einem Trägerkörper 11, auf dem eine sich in Messrichtung x erstreckende Inkrementalteilung 12 angeordnet ist. Die Inkrementalteilung 12 wird aus alternierend in Messrichtung x angeordneten strichförmigen Teilungsbereichen mit unterschiedlichen phasenschiebenden Wirkungen gebildet, die in Figur 2 hell und dunkel dargestellt sind; die Inkrementalteilung ist demzufolge als Phasengitter ausgebildet und besitzt in einer möglichen Ausführungsform einen Phasenhub von 180°. Die Teilungsbereiche der Inkrementalteilung 12 sind in Messrichtung x periodisch mit der Teilungsperiode $TP_{INC}$ angeordnet.

Wie aus Figur 2 ersichtlich, ist auf Seiten der Maßverkörperung 10 im dargestellten Ausführungsbeispiel in der angegebenen y-Richtung benachbart zur Spur mit der Inkrementalteilung 12 eine weitere Spur mit mindestens einer Referenzmarkierung 13 vorgesehen. Die Referenzmarkierung 13 besteht aus einer aperiodischen Anordnung von Teilungsbereichen mit unterschiedlichen phasenschiebenden Wirkungen und dient zur Erzeugung eines Referenzsignals an mindestens einer bekannten Referenzposition entlang der Messstrecke. Derart kann in bekannter Art und Weise ein Absolutbezug für die hochauflösenden inkrementalen Abtastsignale geschaffen werden, die aus der Abtastung der Inkrementalteilung 12 resultieren. Die konkrete Art und Weise der Erzeugung des mindestens einen Referenzsignals ist für die vorliegende Erfindung nicht weiter relevant, hierzu können unterschiedliche Referenzmarkierungs-Abtastvarianten verwendet werden.

Auf Seiten der Abtasteinheit 20 ist eine Lichtquelle 23 auf einem Trägerelement 21 angeordnet, die Licht in Richtung der Maßverkörperung 10 emittiert. Zwischen Lichtquelle 23 und Maßverkörperung 10 sind im vorliegenden Ausführungsbeispiel keine kollimierenden optischen Elemente vorgesehen, d.h. die Lichtquelle 23, beispielsweise ausgebildet als LED, strahlt Licht divergent in Richtung der Maßverkörperung 10 ab. In der Detektionsebene der Abtasteinheit 10 resultiert aufgrund dieser Lichtquellen-Abstrahlcharakteristik eine inhomogene, aber radialsymmetrische Intensitätsverteilung. Die Lichtquelle 23 ist im dargestellten Ausführungsbeispiel in einer Kavität 22.1 eines plättchenförmigen Sensor-Bausteins 22 angeordnet; diese sei nachfolgend auch als Lichtquellen-Kavität 22.1 bezeichnet. Die Lichtquellen-Kavität 22.1 kann hierbei entweder nur als Vertiefung im Sensor-Baustein 22 ausgebildet sein oder aber wie in Figur 1 dargestellt als vollständige Öffnung bzw. pyramidenstumpfförmige Durchätzung des Sensor-Bausteins 22 ausgebildet. Aufgrund der erfolgten Ätzung entlang der Kristallebenen im Sensor-Baustein 22 resultiert ein quadratischer Querschnitt der Lichtquellen-Kavität 22.1 in der Detektionsebene. Um die quadratische Durchätzung der Lichtquellen-Kavität 22.1 bzw. um die Lichtquelle 23 herum wird auf der Oberseite des Sensor-Bausteins 22 in der Detektionsebene eine die Lichtquellen-Kavität 22.1 geschlossen umlaufende Schutzdiode 22.2 angeordnet. Über die Schutzdiode 22.2 werden ggf. dort erzeugte Ladungsträger abgesaugt und derart verhindert, dass es zu Übersprechen auf die benachbarte Detektoranordnung 27 kommt und die darüber erzeugten Abtastsignale einen geringeren Modulationsgrad aufweisen.

Auf der zur Maßverkörperung 10 orientierten Oberseite des Sensor-Bausteins 22 ist senkrecht zur Messrichtung x, d.h. in der angegebenen y-Richtung, benachbart zur Lichtquellen-Kavität 22.1 in der Detektionsebene einerseits eine Detektoranordnung 27 zur Abtastung der Inkrementalteilung 12 und andererseits ein Referenzmarkierungs-Detektor 28 zur Abtastung der Referenzmarkierung 13 platziert; da letzterer nicht Gegenstand der vorliegenden Erfindung ist, wird dieser in Figur 3 lediglich schematisiert angedeutet.

Die Detektoranordnung 27 zur Abtastung der Inkrementalteilung 12 umfasst eine Vielzahl einzelner optoelektronischer Detektorelemente 27.1 - 27.4, die gruppenweise miteinander elektrisch leitend miteinander verbunden sind; innerhalb einer Gruppe sind hierbei diejenigen Detektorelemente 27.1 - 27.4 miteinander verbunden, die phasengleiche Abtastsignale im abgetasteten Streifenmuster erfassen. Die Detektoranordnung 27 ist im dargestellten Ausführungsbeispiel halbkreisförmig ausgebildet und umfasst mehrere konzentrisch um die Lichtquelle 23 angeordnete Spuren mit Detektorelementen 27.1 - 27.4; zu weiteren Details bzgl. der Ausbildung der Detektoranordnung 27 sei auf die nachfolgende Beschreibung verwiesen. Erwähnt sei an dieser Stelle lediglich, dass aufgrund des quadratischen Querschnitts der Lichtquellen-Kavität 22.1 die geometrische Ausbildung der innersten Spur der Detektoranordnung 27 wie aus der Figur ersichtlich von der geometrischen Ausbildung der in radialer Richtung benachbarten Spur abweicht. Die Anzahl der Detektorelemente in dieser Spur entspricht der Anzahl in den anderen Spuren; lediglich die Winkelbreite der Detektorelemente ist reduziert und die Mittenlage einzelner Detektorelemente derart verändert, dass genügend Platz für die quadratische Lichtquellen-Kavität 22.1 und die umlaufende Schutzdiode 22.2 zur Verfügung steht. Diese abweichende Gestaltung der innersten Spur erfolgt, um die Lichtquellen-Kavität 22.1 und die Detektoranordnung 27 möglichst effektiv zu kombinieren. Auf diese Art und Weise kann auch das in unmittelbarer Umgebung der Schutzdiode entstehende Streifenmuster abgetastet werden. Aufgrund der divergenten Ausleuchtung durch die Lichtquelle 23 resultiert in diesem Bereich die höchste Intensität.

Oberhalb des Sensor-Bausteins 22, d.h. in Richtung der Maßverkörperung 10 orientiert, ist eine Abtastplatte 24 in der Abtasteinheit 10 angeordnet, die als transparente Glasplatte ausgebildet ist. Die Abtastplatte 24 trägt auf der dem Sensor-Baustein 22 zugewandten Seite im zentralen Bereich über der Lichtquellen-Kavität 22.1 ein Sendegitter 26. Das Sendegitter 26 ist als Durchlicht-Amplitudengitter ausgebildet, das periodisch in Messrichtung x angeordnete lichtdurchlässige und lichtundurchlässige Teilungsbereiche aufweist; die Teilungsperiode des Sendegitters 26 sei nachfolgend mit $TP_S$ bezeichnet. Desweiteren trägt die Abtastplatte 24 im vorliegenden Beispiel auf der gleichen Seite im Bereich oberhalb der Detektoranordnung 27 Gitter in Form von periodischen Blendenstrukturen 29, die für das vorliegend genutzte Abtastprinzip als Detektionsgitter fungieren. Zur konkreten Ausbildung der Detektoranordnung 27 als auch der periodischen Blendenstrukturen 29 bzw. der Detektionsgitter sei auf die weitere Beschreibung verwiesen. Ferner ist in den Figuren 1 und 3 noch ein Teil des schematisch angedeuteten Gehäuses 25 der Abtasteinheit 20 erkennbar.

Bevor anschließend im Detail auf die Ausbildung der Detektoranordnung 27 für die Inkremental-Abtastung eingegangen wird, sei zunächst der Strahlengang zur Erzeugung der inkrementalen Abtastsignale erläutert.

Die von der Lichtquelle 23 divergent emittierten Strahlenbündel durchlaufen zunächst das Sendegitter 26, gelangen dann auf die Inkrementalteilung 12 auf der Maßverkörperung 10 und werden von dort wieder in Richtung der Abtasteinheit 20 zurückreflektiert. In der Detektionsebene resultiert ein periodisches Streifenmuster mit einer Streifenperiode, die der Periodizität der Blendenstrukturen 29 entspricht. Das periodische Streifenmuster wird mittels der Blendenstrukturen 29 und der Detektoranordnung 27 abgetastet bzw. erfasst und in mehrere positionsabhängige, phasenverschobene Abtastsignale umgewandelt, wenn sich Maßverkörperung 10 und Abtasteinheit 20 relativ zueinander bewegen.

Im Hinblick auf die konkrete Ausbildung der Detektoranordnung 27 für die Inkrementalabtastung sowie den vor dieser vorgeordneten periodischen Blendenstrukturen 29 werden nachfolgend zunächst die zugehörigen theoretischen Überlegungen erläutert.

Hierbei wird davon ausgegangen, dass die entsprechende Detektoranordnung 27 zur Abtastung des in der Detektionsebene resultierenden periodischen Streifenmusters aus eine Vielzahl einzelner Detektorelemente besteht. Die Detektorelemente werden in mehreren Gruppen zusammengefasst, wobei die Detektorelemente einer Gruppe jeweils phasengleiche Abtastsignale liefern. Über die verschiedenen Gruppen werden Abtastsignale mit unterschiedlichen Phasenbeziehungen erzeugt; typischerweise sind etwa $N = 4$ Gruppen vorgesehen, über die vier um jeweils 90° phasenversetzte Abtastsignale erzeugbar sind.

Grundsätzlich erweist sich als vorteilhaft, wenn für eine derartige Detektoranordnung 27 die nachfolgenden Dimensionierungskriterien i) - iv) erfüllt sind:

i) Die Summen der Flächen der Detektorelemente einer Gruppe sind identisch mit den Summen der Flächen der Detektorelemente jeder anderen Gruppe.

ii) Der Flächenschwerpunkt der Detektorelemente einer Gruppe ist identisch mit dem Flächenschwerpunkt der Detektorelemente jeder anderen Gruppe.

iii) Desweiteren erweist sich als vorteilhaft, wenn die verschiedenen Gruppen von Detektorelementen ferner gleiche Komponenten des zweiten Flächenempfindlichkeitsmoments besitzen.

iv) Darüberhinaus resultiert eine nochmals optimierte Detektoranordnung, wenn die verschiedenen Gruppen von Detektorelementen ferner gleiche Werte weiterer Flächenempfindlichkeitsmomente besitzen.

Mathematisch lassen sich diese Bedingungen für die Ausbildung der Detektoranordnung wie folgt darstellen: Es sei

$$S_i(x,y) \begin{cases} S_0(R) \ \textit{im Bereich der lichtempfindlichen Detektorelementflächen der Phase } i \\ 0 \qquad\qquad\qquad\qquad\qquad\qquad\quad \textit{sonst} \end{cases}$$

wobei $S_0(R)$ die Lichtempfindlichkeit (Sensitivität) der Detektorelementflächen angibt.

Mit $i = 1, 2, ..., N$ und

$$R = \sqrt{x^2 + y^2}$$

$N :=$ Anzahl der Signalphasen

Der Photostrom, der von allen lichtempfindlichen Detektorelementflächen, die zu einer Phase gehören, erzeugt wird, ergibt sich hierbei zu

$$IPh_i = \int\limits^{A} S_i(x,y) \cdot I(x,y) \cdot MG(x,y)dA$$

dabei ist:

$I(x,y)$ die mittlere Beleuchtungsintensität am Ort $(x,y)$;
$MG(x,y)$ der lokale Modulationsgrad des Intensitätsstreifenmusters am Ort $(x,y)$

Der Photostrom jeder Phase sollte gleich sein.

Nimmt man nun an, dass die Lichtempfindlichkeit $S_0(R)$ für alle Detektorelementflächen gleich ist und dass die Detektorelemente radial gleichförmig verteilt sind, so kann vereinfachend die Fläche $F_i$ der lichtempfindlichen Detektorelementflächen, die zu einer Phase gehören, betrachtet werden. Diese Fläche $F_i$ ergibt sich zu

$$F_i = \int\limits^A S_i(x, y)\, dA$$

mit

$$S_i(x, y) \begin{cases} S_0 & \text{im Bereich der zu i gehörenden Photoelemente} \\ 0 & \text{sonst} \end{cases}$$

Ziel ist es Flächengleichheit für die Detektorelemente der verschiedenen Phasen zu erreichen, d.h.:

$$F_1 = F_2 = \ldots = F_N$$

Die Koordinaten $xS_i$, $yS_i$ des Schwerpunkts der Flächen der Detektorelemente, die zu einer Phase gehören, sind definiert durch

$$xS_i = \frac{1}{F_i} \int\limits^A x \cdot S_i(x, y)\, dA$$

$$yS_i = \frac{1}{F_i} \int\limits^A y \cdot S_i(x, y)\, dA$$

Idealerweise sind die Koordinaten der Flächenschwerpunkte der Detektorelemente einer Gruppe identisch mit den Flächenschwerpunkten der Detektorelemente jeder anderen Gruppe:

$$xS_1 = xS_2 = \ldots = xS_N$$

$$yS_1 = yS_2 = \ldots = yS_N$$

Die unabhängigen Komponenten des zweiten Flächenempfindlichkeitsmoments sind definiert durch:

$$Qxx_i = \int\limits^A \left(3x^2 - \left(x^2 + y^2\right)\right) \cdot S_i(x, y)\, dA$$

$$Qyy_i = \int\limits^A \left(3y^2 - \left(x^2 + y^2\right)\right) \cdot S_i(x, y)\, dA$$

$$Qxy_i = \int\limits^A (3xy) \cdot S_i(x, y)\, dA$$

Wie oben erwähnt resultiert eine nochmalige Optimierung der Detektoranordnung, wenn die Flächenempfindlichkeitsmomente des zweiten Moments für jede Signalphase gleich sind:

$$Qxx_1 = Qxx_2 = \ldots = Qxx_N$$

$$Qyy_1 = Qyy_2 = \ldots = Qyy_N$$

$$Qxy_1 = Qxy_2 = \ldots = Qxy_N$$

Die unabhängigen Komponenten des dritten Flächenempfindlichkeitsmoments sind definiert durch

$$Oxxx_i = \int\limits^{A} \left(5x^3 - 3x\left(x^2 + y^2\right)\right)\cdot S_i(x, y)\, dA$$

$$Oyyy_i = \int\limits^{A} \left(5y^3 - 3y\left(x^2 + y^2\right)\right)\cdot S_i(x, y)\, dA$$

$$Oxxy_i = \int\limits^{A} \left(5x^2 y - y\left(x^2 + y^2\right)\right)\cdot S_i(x, y)\, dA$$

$$Oxyy_i = \int\limits^{A} \left(5xy^2 - x\left(x^2 + y^2\right)\right)\cdot S_i(x, y)\, dA$$

In einer vorteilhaften Ausführungsform sind auch die Komponenten des dritten Flächenempfindlichkeitsmoments für jede Signalphase gleich:

$$Oxxx_1 = Oxxx_2 = \ldots = Oxxx_N$$

$$Oyyy_1 = Oyyy_2 = \ldots = Oyyy_N$$

$$Oxxy_1 = Oxxy_2 = \ldots = Oxxy_N$$

$$Oxyy_1 = Oxyy_2 = \ldots = Oxyy_N$$

Im Idealfall wird schließlich die Detektoranordnung dergestalt ausgebildet, dass auch weitere höhere Flächenempfindlichkeitsmomente für jede Signalphase gleich sind.

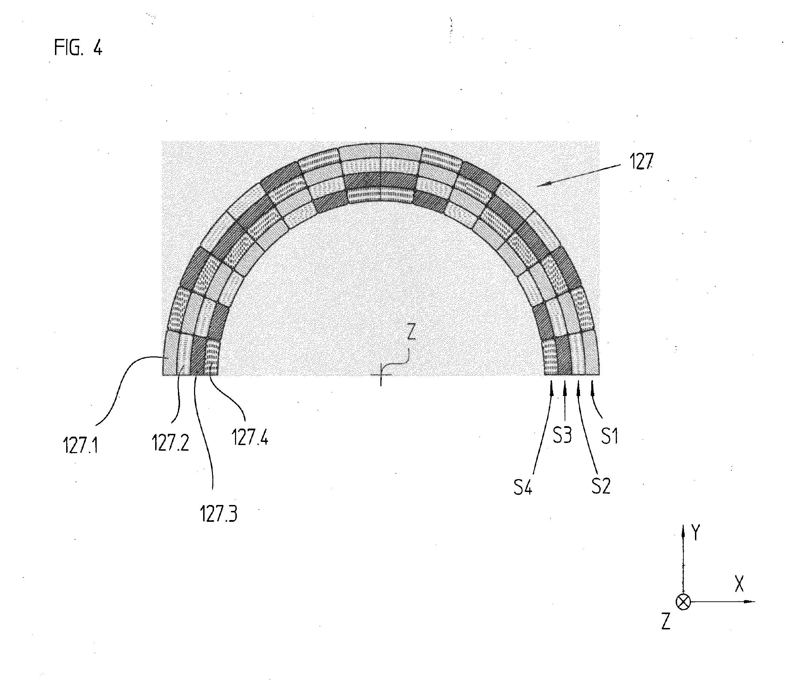

Die in Figur 3 dargestellte Detektoranordnung 27 erfüllt grundsätzlich die o.g. Dimensionierungskriterien i) - iii); eine nochmalige Optimierung würde sich ergeben, wenn auch das Dimensionierungskriterium iv) erfüllt würde. Eine Minimalkonfiguration einer Detektoranordnung 127, die die Dimensionierungskriterien i) - iii) erfüllt, ist in Figur 4 gezeigt. Anhand der Detektoranordnung 127 seien die verschiedenen Dimensionierungskriterien nachfolgend an einem vereinfachten Ausführungsbeispiel veranschaulicht.

Wie bereits im Ausführungsbeispiel der Figur 3 ist auch im Beispiel der Figur 4 wiederum eine kreissegmentförmige, respektive halbkreisförmige Ausbildung der Detektoranordnung 127 vorgesehen; im Zentrum Z des entsprechenden Vollkreises ist die - hier nicht dargestellte - Lichtquelle in der Abtasteinheit platziert. Eine derartige kreissegmentförmige Ausbildung der Detektoranordnung erweist sich insbesondere in optischen Positionsmesseinrichtungen als vorteilhaft, bei denen neben der Abtastung einer Inkrementalteilung auf der Maßverkörperung noch die Abtastung einer neben der Inkrementalteilung angeordneten Referenzmarkierung erfolgt, wie dies etwa im Ausführungsbeispiel der Figur 2 dargestellt ist. In y-Richtung beabstandet von der Detektoranordnung 127 kann auf diese Art und Weise ein - ebenfalls in Figur 4 nicht gezeigter - Referenzmarkierungs-Detektor in der Detektionsebene in der Abtasteinheit angeordnet werden.

Im Beispiel der Figur 4 besteht die Detektoranordnung aus einer Vielzahl von Detektorelementen 127.1 - 12.4, die in vier Spuren S1 - S4 konzentrisch halbkreisförmig um ein Zentrum Z angeordnet sind. Pro Spur S1 - S4 sind jeweils 16 kreissegmentförmige Detektorelemente 127.1 - 127.4 vorgesehen. In der Figur sind diejenigen Detektorelemente 127.1 - 127.4 identisch dargestellt, die zu einer Gruppe gehören und die demzufolge phasengleiche Abtastsignale erfassen. Die Detektorelemente einer ersten Gruppe werden hierbei mit dem Bezugszeichen 127.1 bezeichnet, die Detektorelemente einer zweiten Gruppe mit dem Bezugzeichen 127.2, die Detektorelemente einer dritten Gruppe mit dem Bezugzeichen 127.3 und die Detektorelemente einer vierten Gruppe mit dem Bezugzeichen 127.4. Pro Spur S1 - S4 sind in der Detektoranordnung 127 wie aus Figur 4 ersichtlich je vier Detektorelemente 127.1 - 127.4 aus jeder Gruppe platziert; die Flächen der Detektorelemente 127.1 - 127.4 innerhalb einer Spur sind jeweils identisch gewählt.

Aufgrund dieser Ausbildung der Detektoranordnung 127 ist für diese demzufolge das oben diskutierte Dimensionierungskriterium i) erfüllt. Das heißt, die Summe der Flächen der Detektorelemente 127.1 - 127.4 einer Gruppe ist identisch mit der Summe der Flächen der Detektorelemente 127.1 - 127.4 jeder anderen Gruppe.

Um das erwähnte Dimensionierungskriterium ii) bzgl. der Flächenschwerpunktslagen der Detektorelemente 127.1 - 127.4 der verschiedenen Gruppen zu erfüllen, ist eine bestimmte Anordnung der Detektorelemente 127.1 - 127.4 der verschiedenen Gruppen innerhalb der Detektoranordnung 127 vorgesehen. Diese wird so gewählt, dass ein gemeinsamer Flächenschwerpunkt S der Detektorelemente an der angegebenen Stelle in der Detektionsebene resultiert.

Auch das Dimensionierungskriterium iii) ist im dargestellten, vereinfachten Ausführungsbeispiel einer Detektoranordnung für die erfindungsgemäße optische Positionsmessanordnung erfüllt. Dies bedeutet, dass die verschiedenen Gruppen von Detektorelementen ferner gleiche Werte für die drei Komponenten des zweiten Flächenempfindlichkeitsmoments besitzen.

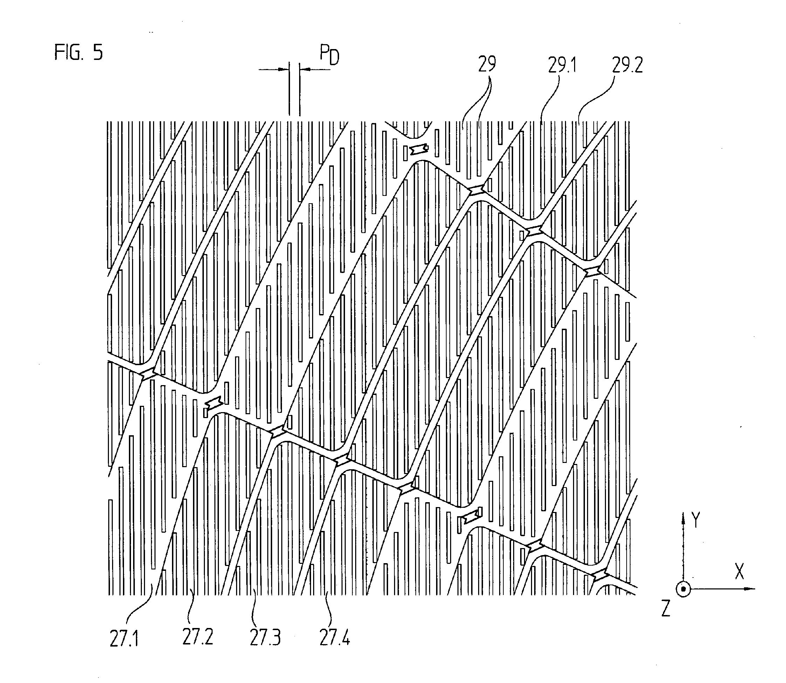

Figur 5 zeigt eine Teilansicht der Detektoranordnung aus Figur 3, wobei zusätzlich zu den Detektorelementen 27.1 - 27.4 für die unterschiedlichen Phasen der damit erzeugten Abtastsignale die periodischen Blendenstrukturen 29 dargestellt sind, die vor den lichtempfindlichen Flächen der Detektorelemente 27.1 - 27.4 im Abtaststrahlengang angeordnet werden. Im Ausführungsbeispiel der Figuren 1 - 3 sind die Blendenstrukturen 29 wie oben erwähnt als Gitter auf der Unterseite der Abtastplatte 24 vorgesehen und bestehen aus in Messrichtung x alternierend angeordneten lichtdurchlässigen Bereichen 29.1 und lichtundurchlässigen Bereichen 29.2. In Figur 5 stellen die schmalen rechteckförmigen Bereiche die lichtdurchlässigen Bereiche 29.1 dar, die periodisch mit der Periodizität $P_D$ entlang der Messrichtung x angeordnet sind. Die Periodizität $P_D$ bzgl. der Anordnung der lichtdurchlässigen Bereiche 29.1 der Blendenstrukturen 29 ist kleiner als die Ausdehnung der einzelnen Detektorelemente 27.1 - 27.4 in Messrichtung x. Die restlichen Bereiche 29.2 der Blendenstrukturen 29 sind undurchlässig ausgebildet.

Die lichtdurchlässigen Bereiche 29.1 der Blendenstrukturen 29 besitzen in Messrichtung x typischerweise eine Breite d gemäß d = 1/2 • PD oder aber d = 1/3 • PD gewählt ist, wobei $P_D$ die Periodizität der lichtdurchlässigen Bereiche der Blendenstrukturen angibt. Die zweitgenannte Variante , d.h. eine Breite d = 1/3 • $P_D$ erlaubt zudem eine gute Filterung unerwünschter dritter Harmonischer, die in der Regel im Streifenmuster enthalten sind

Alternativ zur Anordnung der Blendenstrukturen auf der Unterseite der Abtastplatte kann im Rahmen der vorliegenden Erfindung auch vorgesehen werden, die Blendenstrukturen als Metallisierungsschicht mit entsprechenden lichtdurchlässigen Bereichen unmittelbar auf den Detektorelementen auszubilden.

Eine nochmalige Optimierung der erfindungsgemäßen optischen Positionsmesseinrichtung kann erreicht werden, wenn die o.g. Dimensionierungskriterien i), ii) und ggf. iii) nicht nur auf die Flächen der Detektorelemente 27.1 - 27.4 der Detektoranordnung 27 angewendet werden, sondern zusätzlich auch auf die den Detektorelementen 27.1 - 27.4 vorgeordneten Blendenstrukturen 29, also etwa auf die lichtdurchlässigen Bereiche 29.1 der Blendenstrukturen 29.

Hinsichtlich des Dimensionierungskriteriums i) bedeutet dies, dass die Summe der Flächen der lichtdurchlässigen Bereiche 29.1 der Blendenstrukturen 29 , die einer Gruppe von Detektorelementen 27.1 - 27.4 zugeordnet sind, identisch mit der Summe der Flächen der lichtdurchlässigen Bereiche 29.1 der Blendenstrukturen 29 ist, die jeder anderen Gruppe von Detektorelementen 27.1 - 27.4 zugeordnet sind.

In Bezug auf das Dimensionierungskriterium ii) erfolgt die Ausbildung der Blendenstrukturen 29 dergestalt, dass die Flächenschwerpunkte der lichtdurchlässigen Bereiche 29.1 der Blendenstrukturen 29, die einer Gruppe von Detektorelementen 27.1 - 27.4 zugeordnet sind, identisch mit den Flächenschwerpunkten der lichtdurchlässigen Bereiche 29.1 der Blendenstrukturen 29 sind, die jeder anderen Gruppe von Detektorelementen 27.1 - 27.4 zugeordnet sind.

Desweiteren kann noch das o.g. Dimensionierungskriterium iii) auf die Ausbildung der Blendenstrukturen 29 angewendet werden. Demzufolge ist vorgesehen, dass die lichtdurchlässigen Bereiche 29.1 der Blendenstrukturen 29, die verschiedenen Gruppen von Detektorelementen 27.1 - 27.4 zugeordnet sind, ferner gleiche Werte der drei Komponenten des zweiten Flächenempfindlichkeitsmoments aufweisen.

Schließlich ist es noch möglich, auch die Blendenstrukturen hinsichtlich des Dimensionierungskriteriums iv) zu optimieren, so dass die lichtdurchlässigen Bereiche 29.1 der Blendenstrukturen 29, die verschiedenen Gruppen von Detektorelementen 27.1 - 27.4 zugeordnet sind, ferner gleiche Werte aller weiteren Flächenempfindlichkeitsmomente aufweisen.

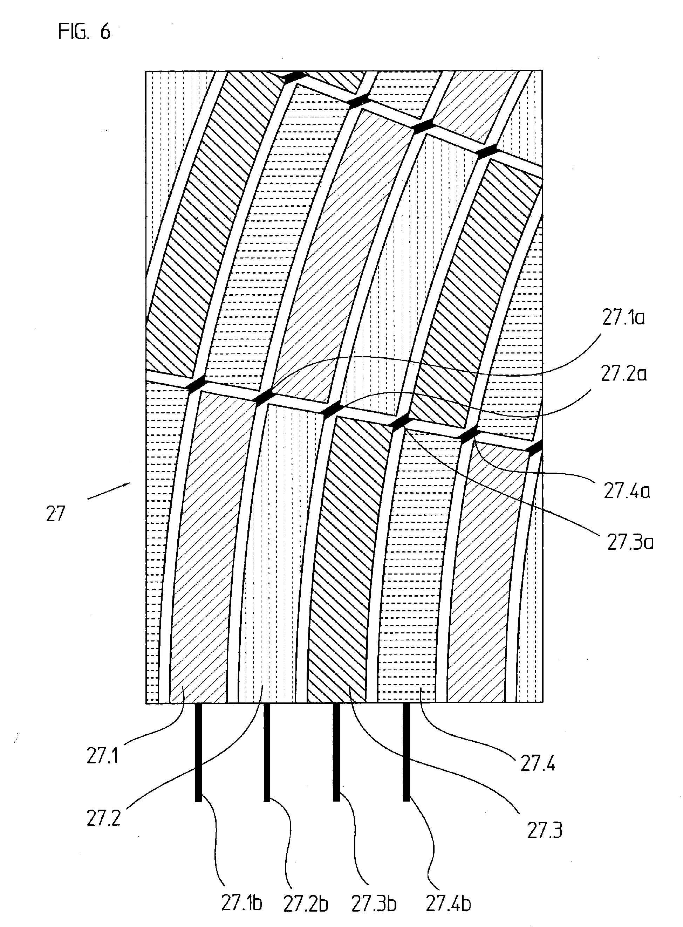

Figur 6 zeigt eine Teilansicht der Detektoranordnung 27 aus Figur 3, nämlich den Bereich der Detektoranordnung 27 am linken Ende der halbkreisförmigen Anordnung; nicht dargestellt sind in dieser Figur die den Detektorelementen 27.1 - 27.4 vorgeordneten Blendenstrukturen. Anhand von Figur 6 soll erläutert werden, wie die elektrische Kontaktierung der Detektorelemente 27.1 - 27.4 in der Detektoranordnung 27 der erfindungsgemäßen optischen Positionsmesseinrichtung erfolgt. So ist zum einen vorgesehen, die Detektorelemente 27.1 - 27.4, die zu einer gemeinsamen Gruppe gehören, über die Kontaktierungsverbindungen 27.1a - 27.4b miteinander elektrisch leitend zu verbinden. Wie aus Figur 6 ersichtlich, verlaufen die Kontaktierungsverbindungen 27.1a - 27.4b hierbei in der aus mehreren konzentrischen halbkreisförmigen Spuren mit Detektorelementen 27.1 - 27.4 bestehenden Detektoranordnung 27 diagonal von Spur zu Spur. Die Kontaktierungsverbindungen 27.1a - 27.4b werden durch geeignet dotierte Bereiche zwischen den Detektorelementen 27.1 - 27.4 innerhalb der Sensoranordnung 27 ausgebildet. Es sind in der Detektoranordnung 27 demzufolge keine Kontaktierungsverbindungen erforderlich, die als metallische Leiterbahnen ggf. über die Detektorelemente 27.1 - 27.4 verlaufen und derart zu nachteiligen Abschattungen und zu Signalstörungen durch kapazitives Übersprechen führen würden.

Desweiteren ist aus Figur 6 ersichtlich, wie die Detektorelementen 27.1 - 27.4 der verschiedenen Gruppen mit - nicht dargestellten - nachgeordneten Signalverarbeitungselementen elektrisch leitend verbunden werden. Dies erfolgt über Ankontaktierungsverbindungen 27.1b - 27.4b, die Detektorelemente 27.1 - 27.4 an den Endkanten der kreissegmentförmigen Detektoranordnung 27 mit nachgeordneten Signalverarbeitungselementen verbinden.

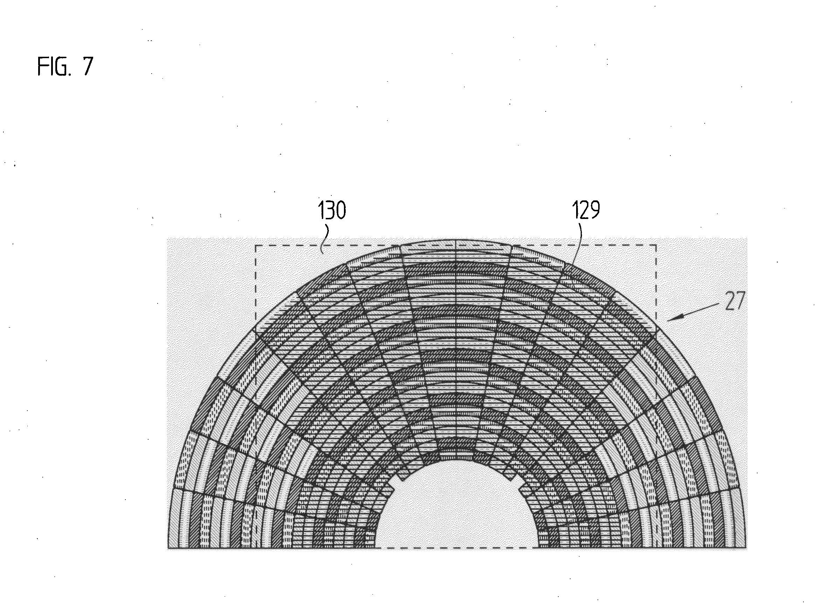

Abschließend sei anhand von Figur 7 eine Detektoranordnung 27 erläutert, die für eine weitere Ausführungsform der erfindungsgemäßen optischen Positionsmesseinrichtung geeignet ist, nämlich für eine rotatorische Positionsmesseinrichtung.

Im Fall einer rotatorischen optischen Positionsmesseinrichtung ist die abgetastete Inkrementalteilung auf der Maßverkörperung in bekannter Art und Weise kreisringförmig bzw. als Radialteilung auf einer Teilscheibe ausgebildet. Die Messrichtung x erstreckt sich hierbei entlang des Kreisumfangs; die beiden gegeneinander beweglichen Objekte rotieren um die Kreisachse.

Die in Figur 3 dargestellte Detektoranordnung 27 kann nunmehr grundsätzlich auch zur Abtastung einer Radialteilung verwendet werden; am Layout der Detektoranordnung 27 sind keine wesentlichen Änderungen erforderlich, d.h. diese wird gemäß den oben diskutierten Dimensionierungskriterien ausgebildet. Lediglich die Ausbildung bzw. Anordnung der Blendenstrukturen 129 über den lichtempfindlichen Flächen der Detektorelemente muss für diesen Anwendungsfall angepasst werden. So ist im Fall der rotatorischen Ausbildung der erfindungsgemäßen optischen Positionsmesseinrichtung vorgesehen, dass die Blendenstrukturen 129 in Abhängigkeit einer Gewichtungsfunktion nur auf einem Teil der Detektorelemente der Detektoranordnung 27 angeordnet werden. Wie bereits oben erläutert, können die Blendenstrukturen 129 sowohl als Gitter auf der Unterseite einer Abtastplatte ausgebildet sein oder aber als Metallisierungsschicht mit lichtdurchlässigen Bereichen auf den Detektorelementen.

Wie aus Figur 7 ersichtlich, sind im dargestellten Beispiel für eine rotatorische Anwendung die Blendenstrukturen 129 lediglich auf Detektorelementen der Detektoranordnung 27 angeordnet, die zusammen näherungsweise einen quadratischen Bereich 130 bilden; in der Figur sind die Blendenstrukturen 129 hierbei lediglich stark schematisiert angedeutet. Nur die in diesem quadratischen Bereich 130 angeordneten Detektorelemente der Detektoranordnung 27 mit den vorgeordneten Blendenstrukturen 129 tragen zur Signalgewinnung bei. Auch die nur im Bereich 130 vorgesehenen Blendenstrukturen 129 sind gemäß den oben diskutierten Dimensionierungskriterien ausgebildet. Im Unterschied zur vorher erläuterten linearen Messanordnung besitzen im rotatorischen Fall die lichtdurchlässigen Bereiche der Blendenstrukturen keine rechteckförmigen, sondern trapezförmige Querschnitte.

Neben den konkret erläuterten Ausführungsbeispielen existieren im Rahmen der vorliegenden Erfindung selbstverständlich noch weitere Ausgestaltungsmöglichkeiten.

Wenn beispielsweise keine benachbart zur Inkrementalteilung angeordnete Referenzmarkierung abgetastet werden muss, kann unter Einhaltung der diskutierten Dimensionierungskriterien für die Detektoranordnung und ggf. für die Blendenstrukturen auch eine kreisförmige Detektoranordnung in der erfindungsgemäßen optischen Positionsmesseinrichtung Verwendung finden usw..

**Patentansprüche**

1. Optische Positionsmesseinrichtung zur Erfassung der Position von zwei relativ zueinander entlang mindestens einer Messrichtung (x) beweglichen Objekten mit

- einer Maßverkörperung (10), die mit einem der beiden Objekte verbunden ist und eine sich in Messrichtung (x) erstreckende Inkrementalteilung (12) umfasst,
- einer Abtasteinheit (20), die mit dem anderen der beiden Objekte verbunden ist und eine Lichtquelle (23), ein oder mehrere Gitter sowie eine Detektoranordnung (27; 127) umfasst, wobei

- die Detektoranordnung (27; 127) aus mehreren in einer Detektionsebene angeordneten Gruppen von Detektorelementen (27.1 - 27.4; 127,1 - 127.4) besteht, über die im Fall der Relativbewegung der beiden Objekte aus der Abtastung eines in der Detektionsebene resultierenden periodischen Streifenmusters mehrere positionsabhängige, phasenverschobene Abtastsignale erzeugbar sind und die Detektorelemente (27.1 - 27.4; 127.1 - 127.4) mit phasengleichen Abtastsignalen jeweils eine Gruppe bilden, wobei

- die Summe der Flächen der Detektorelemente (27.1 - 27.4; 127.1 - 127.4) einer Gruppe identisch mit der Summe der Flächen der Detektorelemente (27.1 - 27.4; 127.1 - 127.4) jeder anderen Gruppe ist und
- der Flächenschwerpunkt der Detektorelemente (27.1 - 27.4; 127.1 - 127.4) einer Gruppe identisch mit dem Flächenschwerpunkt der Detektorelemente (27.1 - 27.4; 127.1 - 127.4) jeder anderen Gruppe ist und
- vor den lichtempfindlichen Flächen der Detektorelemente (27.1 - 27.4; 127.1 - 127.4) periodische Blendenstrukturen (29; 129) angeordnet sind und
- wobei die periodischen Blendenstrukturen (29; 129) aus zumindest in Messrichtung (x) alternierend angeordneten lichtdurchlässigen und lichtundurchlässigen Bereichen bestehen, deren Periodizität kleiner als die Ausdehnung der Detektorelemente (27.1 - 27.4; 127.1 - 127.4) in Messrichtung (x) ist.

2. Optische Positionsmesseinrichtung nach Anspruch 1, wobei

   - die Summe der Flächen der lichtdurchlässigen Bereiche der Blendenstrukturen (29; 129), die einer Gruppe von Detektorelementen (27.1 - 27.4; 127.1 - 127.4) zugeordnet sind, identisch mit der Summe der Flächen der lichtdurchlässigen Bereiche der Blendenstrukturen (29; 129) ist, die jeder anderen Gruppe von Detektorelementen (27.1 - 27.4; 127.1 - 127.4) zugeordnet sind und
   - die Flächenschwerpunkte der lichtdurchlässigen Bereiche der Blendenstrukturen (29; 129), die einer Gruppe von Detektorelementen (27.1 - 27.4; 127.1 - 127.4) zugeordnet sind, identisch mit den Flächenschwerpunkten der lichtdurchlässigen Bereiche der Blendenstrukturen (29; 129) sind, die jeder anderen Gruppe von Detektorelementen (27.1 - 27.4; 127.1 - 127.4) zugeordnet sind.

3. Optische Positionsmesseinrichtung nach Anspruch 2, wobei

   - die verschiedenen Gruppen von Detektorelementen (27.1 - 27.4; 127.1 - 127.4) ferner gleiche Werte der drei Komponenten des zweiten Flächenempfindlichkeitsmoments aufweisen und
   - die lichtdurchlässigen Bereiche der Blendenstrukturen (29; 129), die verschiedenen Gruppen von Detektorelementen (27.1 - 27.4; 127.1 - 127.4) zugeordnet sind, gleiche Werte der drei Komponenten des zweiten Flächenempfindlichkeitsmoments aufweisen.

4. Optische Positionsmesseinrichtung nach Anspruch 3, wobei

   - die verschiedenen Gruppen von Detektorelementen (27.1 - 27.4; 127.1 - 127.4) ferner gleiche Werte aller weiteren Flächenempfindlichkeitsmomente aufweisen und
   - die lichtdurchlässigen Bereiche der Blendenstrukturen (29; 129), die verschiedenen Gruppen von Detektorelementen (27.1 - 27.4; 127.1 - 127.4) zugeordnet sind, ferner gleiche Werte aller weiteren Flächenempfindlichkeitsmomente aufweisen.

5. Optische Positionsmesseinrichtung nach mindestens einem der Ansprüche 1 - 4, wobei

   - die Blendenstrukturen (29; 129) als Gitter auf einer Abtastplatte (24) ausgebildet sind und die Abtastplatte (24) oberhalb der Detektoranordnung (27; 127) in der Abtasteinheit (20) angeordnet ist oder
   - die Blendenstrukturen als Metallisierungsschicht mit lichtdurchlässigen Bereichen auf den Detektorelementen (27.1 - 27.4; 127.1 - 127.4) ausgebildet sind.

6. Optische Positionsmesseinrichtung nach Anspruch 1, wobei die Ausdehnung der Blendenstrukturen (29; 129) in Messrichtung (x) gemäß $d = 112 \cdot P_D$ oder gemäß $d = 1/3 \cdot P_D$ gewählt ist, wobei $d :=$ Breite der Blendenstrukturen in Messrichtung x,
   $P_D :=$ Periodizität der lichtdurchlässigen Bereiche der Blendenstrukturen

7. Optische Positionsmesseinrichtung nach mindestens einem der vorhergehenden Ansprüche, wobei die Blendenstrukturen (129) in Abhängigkeit einer Gewichtungsfunktion nur auf einem Teil der Detektorelemente (127.1 - 127.4) angeordnet sind.

8. Optische Positionsmesseinrichtung nach Anspruch 7, wobei die Blendenstrukturen (129) lediglich auf Detektorelementen (127.1 - 127.4)
   der Detektoranordnung (127) angeordnet sind, die zusammen näherungsweise einen quadratischen Bereich bilden.

9. Optische Positionsmesseinrichtung nach mindestens einem der vorhergehenden Ansprüche, wobei die Detektoranordnung (27; 127) in Form eines Kreissegments ausgebildet ist und mehrere Kreissektoren umfasst, in denen jeweils mehrere Detektorelemente (27.1 - 27.4; 127.1 - 127.4) in mehreren kreisringförmigen Spuren (S1 - S4) radial benachbart angeordnet sind.

10. Optische Positionsmesseinrichtung nach Anspruch 9, wobei die Detektoranordnung (27; 127) halbkreisförmig ausgebildet ist.

11. Optische Positionsmesseinrichtung nach Anspruch 9, wobei die Detektorelemente (27.1 - 27.4; 127.1 - 127.4) benachbarter Spuren (S1 - S4), die phasengleiche Abtastsignale erzeugen, über diagonal verlaufende Kontaktierungsverbindungen (27.1a, 27.2a, 27.3a, 27.4a) miteinander elektrisch verbunden sind.

12. Optische Positionsmesseinrichtung nach Anspruch 9, wobei die Detektorelemente (27.1 - 27.4; 127.1 - 127.4) aus einer Gruppe an den Endkanten der kreissegmentförmigen Detektoranordnungen (27; 127) über Ankontaktierungsverbindungen (27.1b, 27.2b, 27.3b, 27.4b) mit nachgeordneten Signalverarbeitungselementen verbunden sind.

13. Optische Positionsmesseinrichtung nach Anspruch 9, wobei die Detektoranordnung (27; 127) benachbart zur Lichtquelle (23) in der Abtasteinheit (20) angeordnet ist und in der Detektionsebene eine Schutzdiode (22.1) angeordnet ist, welche die Lichtquelle (23) geschlossen umläuft.

14. Optische Positionsmesseinrichtung nach Anspruch 9, wobei die geometrische Ausbildung der radial innersten Spur (S4) der Detektorelemente (27.1a, 27.2a, 27.3a, 27.4a) von der geometrischen Ausbildung der in radialer Richtung benachbarten Spur (S3) abweicht.

**Claims**

1. Optical position measuring device for detecting the position of two objects moving relative to one another along at least one measuring direction (x), having

   - a material measure (10) which is connected to one of the two objects and includes an incremental graduation (12) extending in the measuring direction (x),

      - a scanning unit (20) which is connected to the other one of the two objects and includes a light source (23), one or more gratings and a detector arrangement (27; 127), in which

         - the detector arrangement (27; 127) comprises a plurality of groups, arranged in a detection plane, of detector elements (27.1-27.4; 127.1-127.4) via which, in the case of the relative movement of the two objects, it is possible to produce a plurality of position-dependent, phase-shifted scanning signals from the scanning of a periodic strip pattern resulting in the detection plane, and the detector elements (27.1-27.4; 127.1-127.4) respectively form a group with inphase scanning signals,

            - the sum of the areas of the detector elements (27.1-27.4; 127.1-127.4) of a group being identical to the sum of the areas of the detector elements (27.1-27.4; 127.1-127.4) of each other group, and
            - the centroid of the detector elements (27.1-27.4; 127.1-127.4) of a group being identical to the centroid of the detector elements (27.1-27.4; 127.1-127.4) of each other group, and
            - periodic aperture patterns (29; 129) being arranged upstream of the photosensitive surfaces of the detector elements (27.1-27.4; 127.1-127.4), and
            - the periodic aperture patterns (29; 129) comprising transparent and opaque regions arranged in an alternating fashion at least in the measuring direction (x) and having a periodicity smaller than the extent of the detector elements (27.1-27.4; 127.1-127.4) in the measuring direction (x).

2. Optical position measuring device according to Claim 1, in which

      - the sum of the surfaces of the transparent regions of the aperture patterns (29; 129), which are assigned to a group of detector elements (27.1-27.4; 127.1-127.4), is identical to the sum of the surfaces of the transparent regions of the aperture patterns (29; 129) which are assigned to each other group of detector elements (27.1-27.4; 127.1-127.4), and

- the centroids of the transparent regions of the aperture patterns (29; 129), which are assigned to a group of detector elements (27.1-27.4; 127.1-127.4), are identical to the centroids of the transparent regions of the aperture patterns (29; 129), which are assigned each other group of detector elements (27.1-27.4; 127.1-127.4).

3. Optical position measuring device according to Claim 2, in which

- the various groups of detector elements (27.1-27.4; 127.1-127.4) additionally have the same values of the three components of the second area sensitivity moment, and
- the transparent regions of the aperture patterns (29; 129), which are assigned to various groups of detector elements (27.1-27.4; 127.1-127.4), have the same values of the three components of the second area sensitivity moment.

4. Optical position measuring device according to Claim 3, in which

- the various groups of detector elements (27.1-27.4; 127.1-127.4) additionally have the same values of all further surface sensitivity moments, and
- the transparent regions of the aperture patterns (29; 129), which are assigned to various groups of detector elements (27.1-27.4; 127.1-127.4), additionally have the same values of all further surface sensitivity moments.

5. Optical position measuring device according to at least one of Claims 1-4, in which

- the aperture patterns (29; 129) are designed as gratings on a scanning plate (24), and the scanning plate (24) is arranged above the detector arrangement (27; 127) in the scanning unit (20), or
- the aperture patterns are designed as a metallization coating with transparent regions on the detector elements (27.1-27.4; 127.1-127.4).

6. Optical position measuring device according to Claim 1, in which the extent of the aperture patterns (29; 129) in the measuring direction (x) is selected according to d = 1/2 · $P_D$ or in accordance with d = 1/3 · $P_D$, d being the width of the aperture patterns in the measurement direction x, and $P_D$ being the periodicity of the transparent regions of the aperture patterns.

7. Optical position measuring device according to at least one of the preceding claims, in which, depending on a weighting function, the aperture patterns (129) are arranged only on a portion of the detector elements (127.1-127.4).

8. Optical position measuring device according to Claim 7, in which the aperture patterns (129) are arranged only on detector elements (127.1-127.4) of the detector arrangement (127) which together approximately form a square area.

9. Optical position measuring device according to at least one of the preceding claims, in which the detector arrangement (27; 127) is designed in the shape of a circle segment and comprises a plurality of circle sectors, in each of which a plurality of detector elements (27.1-27.4; 127.1-127.4) are arranged in a radially adjacent fashion in a plurality of annular tracks (S1-S4).

10. Optical position measuring device according to Claim 9, in which the detector arrangement (27; 127) is of semicircular design.

11. Optical position measuring device according to Claim 9, in which the detector elements (27.1-27.4; 127.1-127.4) of adjacent tracks (S1-S4), which generate inphase scanning signals, are electrically interconnected via diagonally running contact connections (27.1a, 27.2a, 27.3a, 27.4a).

12. Optical position measuring device according to Claim 9, in which the detector elements (27.1-27.4; 127.1-127.4) from a group are connected to downstream signal processing elements at the end edges of the detector arrangements (27; 127) in the shape of annular segments via pressure contact connections (27.1b, 27.2b, 27.3b, 27.4b).

13. Optical position measuring device according to Claim 9, in which the detector arrangement (27; 127) is arranged adjacent to the light source (23) in the scanning unit (20), and a protective diode (22.1) surrounding the light source (23) without a break is arranged in the detection plane.

14. Optical position measuring device according to Claim 9, in which the geometrical design of the radially innermost track (S4) of the detector elements (27.1a, 27.2a, 27.3a, 27.4a) deviates from the geometrical design of the track (S3) adjacent in a radial direction.

**Revendications**

1. Dispositif de mesure optique de position destiné à détecter la position de deux objets mobiles l'un par rapport à l'autre le long d'au moins une direction de mesure (x) comportant

   - un étalon de mesure (10), qui est relié à l'un des deux objets et comprend une graduation incrémentale (12) s'étendant dans la direction de mesure (x),
   - une unité de balayage (20) qui est reliée à l'autre des deux objets et une source de lumière (23), un ou plusieurs réseaux et un ensemble détecteur (27; 127), dans lequel
   - l'ensemble détecteur (27 ; 127) est constitué d'une pluralité de groupes d'éléments détecteurs (27.1 - 27.4 ; 127.1 - 127.4) disposés dans un plan de détection, par l'intermédiaire desquels une pluralité de signaux de balayage dépendant de la position et déphasés peuvent être générés dans le cas du mouvement relatif des deux objets à partir du balayage d'un motif de bandes périodiques résultant dans le plan de détection et les éléments détecteurs (27.1 - 27.4 ; 127.1 - 127.4) ayant des signaux de balayage en phase forment respectivement un groupe, dans lequel
   - la somme des surfaces des éléments détecteurs (27.1 - 27.4 ; 127.1 - 127.4) d'un groupe est identique à la somme des surfaces des éléments détecteurs (27.1 - 27.4 ; 127.1 - 127.4) de chaque autre groupe et - le barycentre des éléments détecteurs (27.1 - 27.4 ; 127.1 - 127.4) d'un groupe est identique au barycentre des éléments détecteurs (27.1 - 27.4 ; 127.1 - 127.4) de chaque autre groupe et
   - des structures de chicanes périodiques (29 ; 129) sont disposées devant les surfaces photosensibles des éléments détecteurs (27.1 - 27.4 ; 127.1 - 127.4) et
   - dans lequel les structures de chicanes périodiques (29 ; 129) sont constituées de zones optiquement transparentes et optiquement opaques agencées en alternance au moins dans la direction de mesure (x), dont la périodicité est inférieure à l'extension des éléments détecteurs (27.1 - 27.4 ; 127.1 - 127.4) dans la direction de mesure (x).

2. Dispositif de mesure optique de position selon la revendication 1, dans lequel

   - la somme des surfaces des zones optiquement transparentes des structures de chicanes (29 ; 129) qui sont associées à un groupe d'éléments détecteurs (27.1
   - 27.4 ; 127.1 - 127.4) est identique à la somme des surfaces des zones optiquement transparentes des structures de chicanes (29 ; 129) qui sont associées à chaque autre groupe d'éléments détecteurs (27.1 - 27.4 ; 127.1 - 127.4) et
   - les barycentres des zones optiquement transparentes des structures de chicanes (29 ; 129) qui sont associées à un groupe d'éléments détecteurs (27.1 - 27.4 ; 127.1 - 127.4) sont identiques aux barycentres des zones optiquement transparentes des structures de chicanes (29 ; 129) qui sont associées à chaque autre groupe d'éléments détecteurs (27.1 - 27.4 ; 127.1 - 127.4).

3. Dispositif de mesure optique de position selon la revendication 2, dans lequel

   - les différents groupes d'éléments détecteurs (27.1 - 27.4 ; 127.1 - 127.4) présentent en outre les mêmes valeurs des trois composantes du second moment de sensibilité surfacique et
   - les zones optiquement transparentes des structures de chicanes (29 ; 129) qui sont associées à différents groupes d'éléments détecteurs (27.1 - 27.4 ; 127.1 - 127.4) présentent les mêmes valeurs des trois composantes du second moment de sensibilité surfacique.

4. Dispositif de mesure optique de position selon la revendication 3, dans lequel

   - les différents groupes d'éléments détecteurs (27.1 - 27.4 ; 127.1 - 127.4) présentent en outre les mêmes valeurs de tous les autres moments de sensibilité surfacique et
   - les zones optiquement transparentes des structures de chicanes (29 ; 129) qui sont associées à différents groupes d'éléments détecteurs (27.1 - 27.4 ; 127.1 - 127.4) présentent en outre les mêmes valeurs de tous les autres moments de sensibilité surfacique.

**5.** Dispositif de mesure optique de position selon au moins l'une des revendications 1 - 4, dans lequel

- les structures de chicanes (29 ; 129) sont réalisées sous la forme de réseaux sur une plaque de balayage (24) et la plaque de balayage (24) est disposée au-dessus de l'ensemble détecteur (27 ; 127) dans l'unité de balayage (20) ou
- les structures de chicanes sont réalisées sous la forme d'une couche de métallisation comportant des zones optiquement transparentes sur les éléments détecteurs (27.1 - 27.4 ; 127.1 - 127.4).

**6.** Dispositif de mesure optique de position selon la revendication 1, dans lequel l'extension des structures de chicanes (29 ; 129) dans la direction de mesure (x) est sélectionnée de manière à ce que d = 1/2·$P_D$ ou d = 1/3·$P_D$, dans lequel
d := largeur des structures de chicanes dans la direction de mesure x,
$P_D$ := périodicité des zones optiquement transparentes des structures de chicanes.

**7.** Dispositif de mesure optique de position selon au moins l'une des revendications précédentes, dans lequel les structures de chicanes (129) ne sont disposées que sur une partie des éléments détecteurs (127.1 - 127.4) conformément à une fonction de pondération.

**8.** Dispositif de mesure optique de position selon la revendication 7, dans lequel les structures de chicanes (129) sont uniquement disposées sur des éléments détecteurs (127.1 - 127.4) de l'ensemble détecteur (127), qui forment ensemble une zone approximativement quadratique.

**9.** Dispositif de mesure optique de position selon au moins l'une des revendications précédentes, dans lequel l'ensemble détecteur (27 ; 127) est réalisé sous la forme d'un segment de cercle et comprend une pluralité de secteurs circulaires dans lesquels sont respectivement disposés de manière radialement adjacente une pluralité d'éléments détecteurs (27.1 - 27.4 ; 127.1 - 127.4) dans une pluralité de pistes de forme circulaire (S1 - S4).

**10.** Dispositif de mesure optique de position selon la revendication 9, dans lequel l'ensemble détecteur (27 ; 127) présente la forme d'un demi-cercle.

**11.** Dispositif de mesure optique de position selon la revendication 9, dans lequel les éléments détecteurs (27.1 - 27.4 ; 127.1 - 127.4) de pistes adjacentes (S1 - S4), qui génèrent des signaux de balayage en phase, sont électriquement connectés les uns aux autres par l'intermédiaire de liaisons de contact (27.1a, 27.2a, 27.3a, 27.4a) s'étendant en diagonale.

**12.** Dispositif de mesure optique de position selon la revendication 9, dans lequel les éléments détecteurs (27.1 - 27.4 ; 127.1 - 127.4) d'un groupe sont connectés à des éléments de traitement du signal disposés en aval au niveau des angles d'extrémité des dispositifs détecteurs (27 ; 127) en forme de segments de cercle par l'intermédiaire de liaisons de mise en contact (27.1b, 27.2b, 27.3b, 27.4b).

**13.** Dispositif de mesure optique de position selon la revendication 9, dans lequel l'ensemble détecteur (27 ; 127) est disposé de manière adjacente à la source de lumière (23) dans l'unité de balayage (20) et une diode de protection (22.1), qui fait un tour complet de la source de lumière (23), est disposée dans le plan de détection.

**14.** Dispositif de mesure optique de position selon la revendication 9, dans lequel la configuration géométrique de la piste radiale la plus intérieure (S4) des éléments détecteurs (27.1a, 27.2a, 27.3a, 27.4a) s'écarte de la configuration géométrique de la piste adjacente (S3) dans la direction radiale.

EP 2 520 906 B1

FIG. 1

FIG. 2

FIG. 3

25

27

27.1
27.2
27.3
27.4

23

22.2
22.1

28

22

X
Y
Z

FIG. 4

FIG. 5

FIG. 6

27.1a

27.2a

27.4a

27.3a

27

27.1

27.2

27.4

27.3

27.1b   27.2b   27.3b   27.4b

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2233892 A1

**In der Beschreibung aufgeführte Nicht-Patentliteratur**

- **J. CARR et al.** Miniaturised optical encoder for ultra precision metrology systems. *Precision Engineering,* 2009, vol. 33, 263-267